# FASCICULE DE BREVET EUROPEEN

(11) **EP 1 689 613 B1**
(45) Date de publication et mention de la délivrance du brevet: **09.09.2009**
(21) Numéro de dépôt: 04805822.6
(22) Date de dépôt: 10.11.2004
(51) Int. Cl.: B60N 2/62

(54) **ASSISE POUR SIEGE DE VEHICULE AUTOMOBILE A LONGUEUR AJUSTABLE**
LÄNGENVERSTELLBARES KISSEN FÜR EINEN KRAFTFAHRZEUGSITZ
LENGTH ADJUSTABLE CUSHION FOR A MOTOR VEHICLE SEAT

(30) Priorité: 24.11.2003 FR 0313722
(43) Date de publication de la demande: 16.08.2006
(73) Titulaire: RENAULT S.A.S., 92100 Boulogne Billancourt (FR)
(72) Inventeur: LUZIER, Philippe, F-92230 GENEVILLIERS (FR); LECLERC, Jean Philippe, F-28130 HOUX (FR)
(86) Numéro de dépôt international: PCT/FR2004/050579
(87) Numéro de publication internationale: WO 2005/051705

(56) Documents cités:
- DE-A- 3 244 584
- DE-A- 4 114 735
- DE-A- 19 843 550
- DE-U- 9 300 810
- US-A- 3 446 532
- US-A- 4 018 477
- US-A- 5 080 433
- PATENT ABSTRACTS OF JAPAN vol. 0173, no. 68 (M-1443), 12 juillet 1993 (1993-07-12) -& JP 05 058205 A (TOYOTA AUTOM LOOM WORKS LTD), 9 mars 1993 (1993-03-09)

## Description

L'invention concerne une assise de longueur ajustable pour siège de véhicule automobile.

Les sièges pour véhicules automobiles sont généralement dimensionnés pour des occupants de taille adulte, la longueur de l'assise étant adaptée à la longueur moyenne des jambes d'un adulte. Cette longueur est cependant trop importante pour un enfant ou une personne de petite taille, le bord de l'assise gênant leur circulation sanguine au niveau des jambes, rendant la position assise inconfortable, en particulier sur les longs trajets.

Il existe déjà des dispositifs permettant de modifier la longueur de l'assise d'un siège afin de l'adapter à la taille de son occupant. Généralement, la longueur de l'assise est réglée en modifiant la position ou la forme de la partie avant de l'assise.

Par exemple, le document US-3 446 532 décrit un siège dont la partie avant d'assise comporte des sections articulées entre elles. Ces sections peuvent être inclinées vers le bas au moyen d'une vis de réglage. La manipulation de la vis pour régler la longueur de l'assise à chaque nouvel occupant peut toutefois s'avérer fastidieuse.

D'autres documents décrivent des dispositifs comportant de nombreuse pièces, complexes à monter et coûteuses. Par exemple, le document US-4 018 477 décrit un dispositif permettant d'incliner la partie avant d'assise par un système de levier et ressort. Le document DE-41 14 735 décrit un dispositif permettant de dérouler en avant de l'assise la housse la recouvrant tout en la supportant au moyen d'un support rotatif. Ou encore, le document DE-32 44 584 décrit un dispositif comportant une pièce supportant la housse de la partie avant d'assise et dont les côtés présentent différentes longueurs correspondant à différentes longueurs d'assise. La longueur de l'assise est réglée par rotation de la pièce.

L'invention vise à pallier ces inconvénients en proposant une assise dont la partie avant peut être facilement pliée afin de réduire la longueur de l'assise grâce à des moyens simples, faciles à monter et peu coûteux. Ces moyens présentent en outre l'avantage de pouvoir être facilement montés sur des assises de sièges existants en ne modifiant que très peu la structure de l'assise.

A cet effet, l'objet de l'invention concerne une assise de longueur ajustable pour siège de véhicule automobile pourvue d'une garniture et d'un support de garniture, ladite assise comportant une partie centrale et une partie avant s'étendant en partie au-delà dudit support et apte à être pliée de manière à faire varier la longueur de l'assise, **caractérisée en ce que** la partie avant du support comporte une surface d'appui apte à supporter une portion de ladite partie avant d'assise lorsque la partie avant d'assise subit une traction vers le bas, une autre portion de la partie avant d'assise étant pliée le long d'un bord de ladite surface d'appui sous l'effet de ladite traction et en ce que ledit support est pourvu de moyens d'accrochage coopérant avec ladite partie avant d'assise afin de maintenir celle-ci dans au moins une première position dans laquelle elle ne repose pas sur la surface d'appui, et dans au moins une deuxième position dans laquelle elle repose sur la surface d'appui et subit une traction vers le bas, tel que décrit par exemple dans le document DE-A-4114735 cité ci-dessus. L'objet de l'invention se caractérise en ce que ladite partie avant d'assise est formée de deux sections reliées, une première section étant adjacente à la partie centrale d'assise, la deuxième section formant l'extrémité libre de l'assise, ladite première section pouvant être pliée le long dudit bord de ladite surface d'appui et/ou s'étendre au moins en partie sensiblement dans la continuité de la partie centrale d'assise, plus particulièrement, dans ladite au moins une première position, lesdites première et deuxième sections sont rapprochées, leurs faces inférieures se faisant face et formant un angle aigu, ladite première section s'étendant sensiblement dans la continuité de la partie centrale d'assise et en ce que la face inférieure de ladite partie avant d'assise est au moins en partie rigide et saille de l'extrémité libre de ladite partie avant d'assise de manière à pouvoir coopérer avec lesdits moyens d'accrochage du support, les moyens d'accrochage du support sont solidaires de la partie avant dudit support ou de son extrémité libre, et sont dirigés vers l'extrémité avant de l'assise. Les autres caractéristiques décrites ci-après font l'objet des revendications dépendantes.

Le pliage, correspondant à une assise raccourcie, est ainsi facilement obtenu en tirant la partie avant de l'assise vers le bas, le bord de la surface d'appui formant une ligne d'appui provoquant le pliage de la partie avant, ce pliage étant maintenu par le maintien de la partie avant en traction grâce aux moyens d'accrochage, La partie avant d'assise et la surface d'appui selon invention peuvent être facilement adaptés et montées sur une assise existante, ce qui permet de limiter les coûts de fabrication. Les deux portions de la partie avant peuvent être formées de deux garnitures séparées sensiblement au niveau de la ligne de pliage, ou d'une seule garniture continue apte à être pliée.

La deuxième section est alors généralement dirigée vers le bas et ne sert pas de surface d'assise proprement dite, mais permet d'améliorer le confort du passager et l'esthétique du siège.

Avantageusement, dans ladite au moins une première position, lesdites première et deuxième sections de la partie avant d'assise sont maintenues proches l'une de l'autre par des moyens de maintien. Cette association permet de renforcer la partie avant de l'assise, la première section prenant appui sur la deuxième section.

Avantageusement, les moyens de maintien sont solidaires des faces inférieures desdites première et deuxième sections de la partie avant d'assise.

Avantageusement, les moyens de maintien sont aptes à coopérer avec lesdits moyens d'accrochage du support dans l'une au moins des première et seconde positions. Le nombre d'éléments servant à l'accrochage est ainsi limité, ce qui permet de simplifier la fabrication et de réduire les coûts.

Cet agencement permet également de simplifier la réalisation des moyens d'accrochage.

Plus particulièrement, la face inférieure est rigide au niveau des moyens de maintien, renforçant ainsi la solidité de l'accrochage.

Le positionnement des moyens d'accrochage sur le support permet d'éviter d'avoir à modifier d'autres parties de l'assise ou du siège, et de faciliter le montage de la partie avant d'assise sur une assise existante. Le montage des parties avant selon l'invention ne nécessite ainsi que peu de modifications des chaînes de montage existantes.

Avantageusement, la partie avant du support présente au moins deux surfaces adjacentes : une surface formant au moins en partie ladite surface d'appui, et une surface inclinée vers le bas formant avec ladite surface d'appui un angle suffisant pour provoquer le pliage de ladite partie avant d'assise dans ladite au moins une deuxième position. Une telle forme peut être facilement réalisée par moulage ou autre, et rajoutée à un support de garniture existant, ou bien réalisée d'un seul tenant avec le reste du support. De préférence, ladite surface inclinée forme un angle sensiblement droit avec ladite surface d'appui.

L'invention est maintenant décrite en référence aux dessins annexés, non limitatifs, dans lesquels:
- la figure 1 est une vue en perspective d'une assise selon l'invention en position adulte ;
- la figure 2 est une vue en perspective d'une assise selon l'invention en position enfant ;
- la figure 3 est une vue en coupe longitudinale partielle de l'assise représentée figure 1 ;
- les figures 4 et 5 sont des vues de détail de la figure 3, représentant notamment des moyens d'accrochage ;
- la figure 6 est une vue en coupe longitudinale de l'assise représentée figure 2 ;
- la figure 7 représente une variante des moyens d'accrochage représentés figure 5.

Une assise selon l'invention pour un siège de véhicule automobile est décrite en référence aux figures. Seule l'assise a été représentée, le dossier ayant été omis pour plus de clarté.

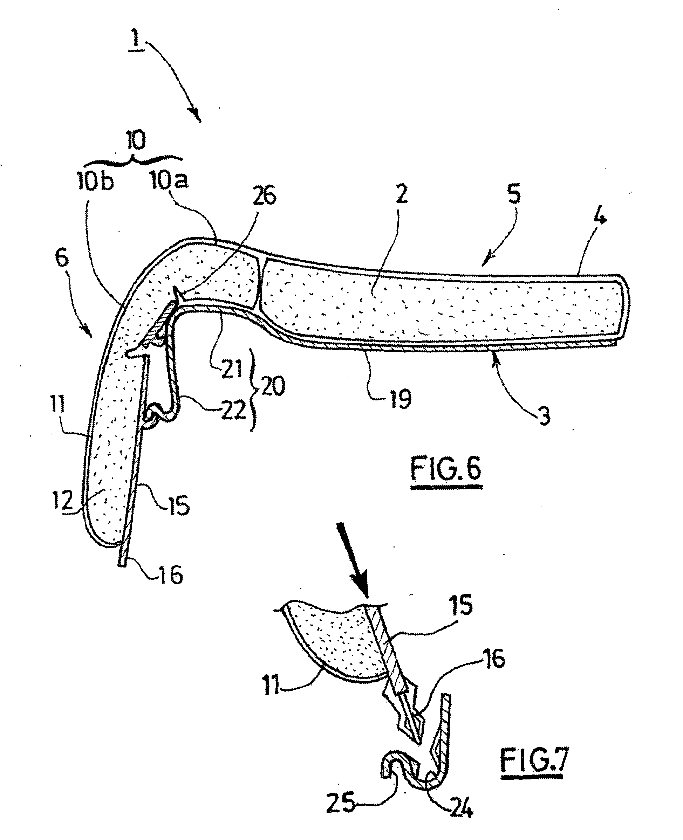

En référence à la figure 6, l'assise 1 est formée d'une garniture 2, telle que de la mousse ou similaire, supportée par un support de garniture 3 rigide, et maintenue sur ledit support rigide 3 par une housse 4. Pour un meilleur maintien, la garniture 2 peut être collée de manière connue sur le support 3. L'assise comprend une partie centrale 5 et une partie avant 6. Cette dernière s'étend en partie au-delà dudit support 3 vers l'avant du siège et est apte à être pliée de manière à faire varier la longueur de l'assise. La partie avant 6 est conçue de manière à ne pas être en permanence en appui sur le support rigide 3, notamment sur la partie avant de ce dernier.

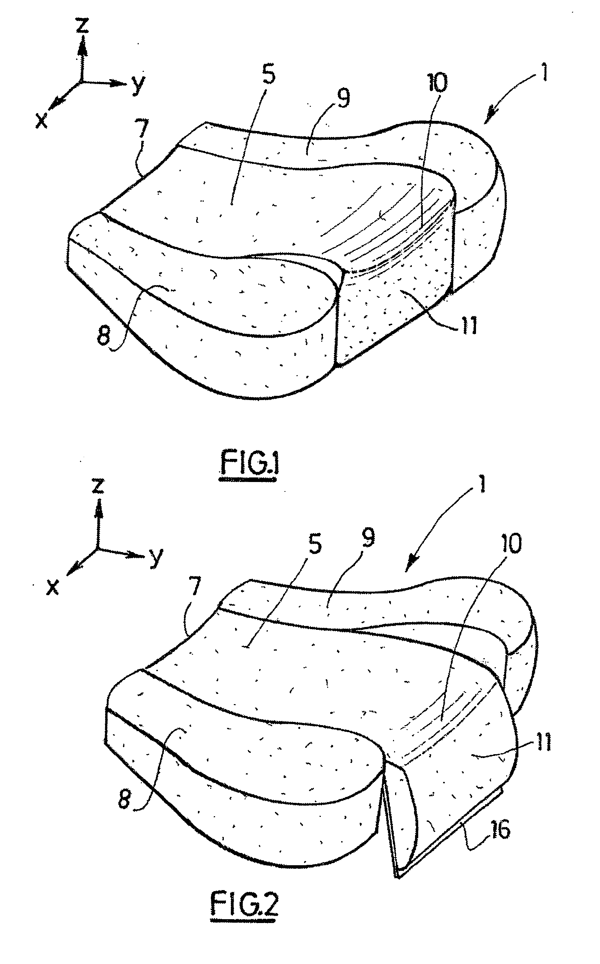

Sur les figures 1 et 2, les directions X, Y, Z s'étendent respectivement suivant la largeur, la longueur et la hauteur de l'assise.

Dans la description, on définit par "avant", le côté dirigé vers l'extrémité libre de l'assise suivant la direction longitudinale Y de l'assise, du côté opposé au bord 7 destiné à être relié au dossier.

Sur les figures 1 et 2, l'assise présente également des bordures latérales 8, 9 s'étendant de part et d'autre de la partie centrale 5 sensiblement suivant la direction longitudinale Y de l'assise. Ces bordures latérales 8, 9 sont formées de manière similaire d'une garniture recouverte d'une housse, et sont fixes. Elles permettent d'obtenir une assise avec une forme générale en baquet améliorant le soutien de l'occupant. Bien entendu, ces bordures peuvent être omises dans d'autres modes de réalisation de l'invention, ou être mobiles de la même manière que la partie avant 6.

Dans le mode de réalisation représenté, la partie avant 6 est formée de deux sections transversales adjacentes 10 et 11. Chaque section présente une forme sensiblement rectangulaire, dont les grands côtés s'étendent sur sensiblement toute la largeur de l'assise, sensiblement perpendiculairement à la direction longitudinale Y. Ces sections sont adjacentes entre elles et à la partie centrale 5 le long de l'un de leur grand côté. La première section 10 est adjacente à la partie centrale 5 et située dans le prolongement de celle-ci, la deuxième section 11 étant située dans le prolongement de la première section et formant l'extrémité libre de l'assise. Ces deux sections sont formées d'une seule garniture 12 maintenue par la housse 4 présentant par exemple une zone lui permettant d'être pliée au niveau de la jonction entre les sections. On peut toutefois envisager deux garnitures distincts pour chaque section.

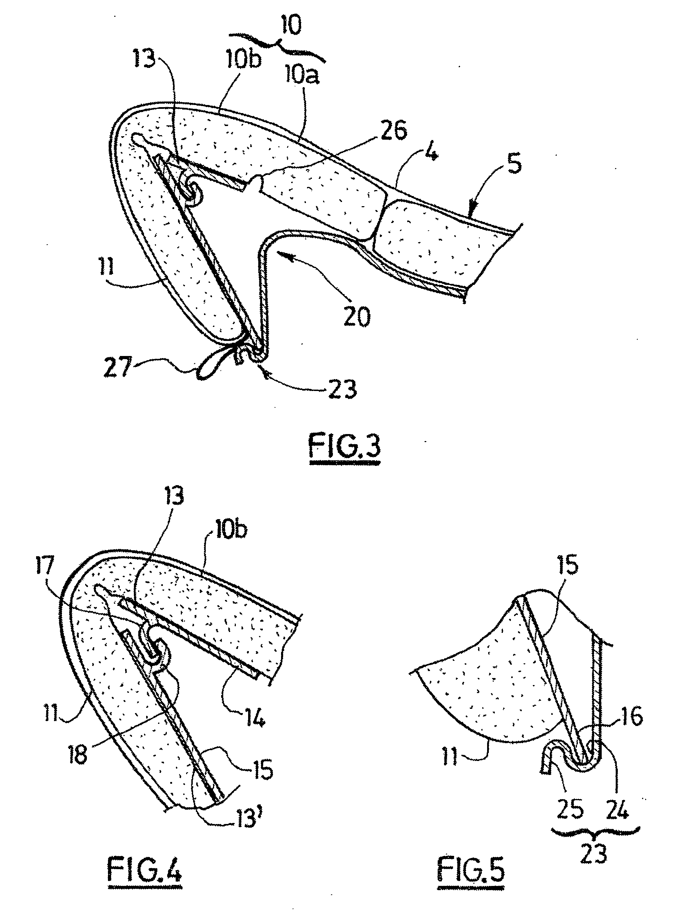

La première section 10 présente deux portions adjacentes 10a et 10b. Chaque portion présente une forme sensiblement rectangulaire, dont les grands côtés s'étendent sur sensiblement toute la largeur de l'assise, sensiblement perpendiculairement à la direction longitudinale Y. Ces portions sont adjacentes entre elles, à la partie centrale 5 et à la deuxième section 11, le long de l'un de leur grand côté. La première portion 10a est adjacente à la partie centrale 5. La deuxième portion 10b est adjacente à la deuxième section 11. La face inférieure 13 de la première section 10, dirigée du côté opposé à la surface destinée à recevoir l'occupant, est au moins en partie rigide. A cet effet, elle est par exemple collée sur une plaque rigide 14 (figure 4). La face inférieure 13' de la deuxième section 11, définie de la même manière, est également rigidifiée au moyen d'une plaque rigide 15. Une partie 16 de la plaque 15 fait légèrement saillie du grand côté de la deuxième section, le long du bord libre de celle-ci (figures 2 et 5). De préférence, ces plaques 14, 15 s'étendent sur sensiblement toute la surface des parties auxquelles elles sont fixées, par exemple par collage, et notamment sur toute leur largeur.

A proximité de la jonction entre les première et deuxième sections 10 et 11, les plaques rigides 14 et 15 sont pourvue de moyens de maintien. Ces moyens de maintien consistent en des profilés 17, 18 respectivement, s'étendant de préférence sur toute la largeur de chaque plaque, sensiblement perpendiculairement à la direction Y. La section de chaque profilé 17, 18 présente une forme de crochet tel que représenté sur là figure 4. Ces profilés en forme de crochet 17, 18 sont dirigés dans des directions opposées lorsque les faces 13, 13' des première et deuxième sections sont en regard, de manière à pouvoir être mis en prise l'un dans l'autre, tel que représenté figures 3 et 4, afin de maintenir les deux sections 10 et 11 à proximité l'une de l'autre. De préférence, le creux du profilé 17, solidaire de la plaque 14, est dirigé vers la partie centrale 5 de l'assise.

En référence à la figure 6, le support rigide 3 présente une partie centrale 19 située sensiblement sous, et supportant, la partie centrale 5 de l'assise, et une partie avant 20 s'étendant sensiblement en dessous d'une partie de la partie avant 6 de l'assise. Cette partie avant de support 20 présente une surface sensiblement plane 21 formant une surface d'appui, et une surface 22 inclinée vers le bas. La surface d'appui 21 s'étend sensiblement horizontalement sous la première portion 10a de la section 10, de manière à pouvoir la supporter le cas échéant. Dans l'exemple, la surface d'appui 21 est située dans un plan légèrement au-dessus du plan de la partie centrale 19 du support. La partie avant du support 20 est ainsi surélevée et peut former une bosse anti-sousmarinage. L'angle formé entre la surface d'appui 21 et la surface 22 doit être suffisant pour provoquer le pliage de la partie avant d'assise 6, notamment entre les portions 10a et 10b, lorsqu'une traction vers le bas est exercée sur cette partie avant 6. Dans l'exemple, cet angle est sensiblement droit. L'extrémité libre de la surface inclinée 22 présente des moyens d'accrochage disposés sur sa face en regard de la partie avant 6. Ces moyens sont formés d'un profilé 23 formé dans la continuité de la surface 22 et s'étendant sensiblement suivant la direction X. Ce profilé 23 présente une section sensiblement une forme de S couché et inversé, comportant une rainure de réception 24, dont la concavité est dirigée vers le haut (vers la partie avant d'assise) et un crochet 25 dont la concavité est dirigée vers le bas, dans une direction opposée, tel que visible sur la figure 5. L'extrémité libre du crochet forme le bord libre du profilé 23, et de la surface 22.

Les deux positions que la partie avant d'assise 6 de l'exemple représenté peut adopter sont maintenant décrites en référence aux figures.

Les figures 1 et 3 à 5 représentent l'assise dans une position adulte, c'est-à-dire dans une position dans laquelle la longueur de l'assise est maximale. Dans cette première position, l'extrémité 16 de la plaque rigide de la deuxième section 11 repose dans la rainure de réception 24 du support (figure 5). Dans cette même position, les moyens de maintien 17, 18 sont en prise l'un avec l'autre maintenant les faces inférieures 13, 13' des première et deuxième sections 10 et 11 à proximité l'une de l'autre (figure 4). De préférence, les dimensions de la partie avant de support 20 et des première et deuxième sections 10, 11 sont conçues pour que la rainure de réception 24 soit située en arrière de la jonction entre les première et deuxième sections 10, 11, l'angle entre les surfaces 13 et 13' étant aigu et dirigé vers l'arrière de l'assise. De cette manière, la deuxième section 11 peut soutenir plus efficacement la première section 10, améliorant ainsi la robustesse de l'ensemble de la partie avant 6. Dans cette position, l'occupant dispose donc de la totalité des surfaces de la partie centrale 5 et de la première section 10 pour s'asseoir.

En variante, la rainure 24 du profilé 23 et l'extrémité 16 de la plaque rigide 15 peuvent être agencées de manière à s'encliqueter l'une dans l'autre, la rainure 24 formant un organe femelle d'encliquetage et l'extrémité 16 un organe mâle complémentaire d'encliquetage tel que représenté sur la figure 7.

Les figures 2 et 6 représentent l'assise dans une position enfant, dans laquelle l'assise présente sa plus faible longueur. Dans cette deuxième position, le profilé 18 solidaire de la plaque rigide 15 de la deuxième section est mis en prise avec le profilé formant crochet 25 de la partie avant du support 20, tel que visible sur la figure 6. Le crochet 25 est positionné de manière à ce que, dans cette position, l'accrochage avec le profilé 18 exerce une traction, sur l'ensemble de la partie avant d'assise 6, suffisante pour que la première portion 10a soit en appui sur la surface d'appui 21 et que la première section 10 se plie entre les première et deuxième portions 10a, 10b, sensiblement le long du bord de jonction entre la surface d'appui 21 et la surface inclinée 22 du support (figure 6). A cet effet, afin de faciliter le pliage, la garniture 12 au niveau de la première section 10 peut comporter un évidement 26 du côté de sa surface inférieure sensiblement entre les première et deuxième portions.

Dans cette position, l'occupant dispose de la totalité de la surface de la partie centrale 5, mais seulement de la surface de la première portion 10a de la première section 10, de sorte que la longueur de l'assise est réduite.

Pour passer de la première à la deuxième position, il suffit de soulever la deuxième section 11 afin de dégager la partie 16 de la rainure de réception 24, puis de tirer cette portion vers le bas jusqu'à mise en prise des profilés 18 et 25. La manipulation inverse permet de revenir à la première position. Une languette ou poignée souple 27 fixée à l'extrémité libre de la deuxième section 11 permet de faciliter la manipulation de l'assise (figure 3).

Afin d'améliorer le confort de l'occupant, la surface d'appui 21 peut être légèrement plus haute que la partie centrale 19 du support, tel que visible sur les figures 3 et 6, pour rehausser l'avant de l'assise.

Dans des variantes non représentées, les profilés 17, 18, 24, 25 peuvent être discontinus et répartis sur la largeur de l'assise (direction X), ou être formés de crochets. Les plaques rigides 14, 15 peuvent alors être remplacées par des cadres ou grilles supportant les portions de profilés ou les crochets.

De préférence, la partie avant 20 du support est rigide mais présente une certaine élasticité lui permettant de subir les efforts exercés par l'occupant sur la partie avant d'assise 6 sans se rompre.

Bien entendu, d'autres formes ou types de moyens d'accrochage ou de maintien peuvent être utilisés sans sortir du cadre de l'invention.

Par ailleurs, on peut prévoir plus de deux positions de la partie avant d'assise, en prévoyant par exemple des moyens d'accrochage et de maintien supplémentaires, par exemple à mi-hauteur de la surface 22 ou à différents niveau de la (ou des) surface(s) inférieure(s) 13, 13' des première et deuxième sections.

## Revendications

1. Assise de longueur ajustable pour siège de véhicule automobile pourvue d'une garniture (2) et d'un support de garniture (3), ladite assise comportant une partie centrale (5) et une partie avant (6) s'étendant en partie au-delà dudit support et apte à être pliée de manière à faire varier la longueur de l'assise, ladite partie avant du support (20) comportant une surface d'appui (21) apte à supporter une portion (10a) de ladite partie avant d'assise lorsque la partie avant d'assise subit une traction vers le bas, une autre portion (10b) de la partie avant d'assise étant pliée le long d'un bord de ladite surface d'appui sous l'effet de ladite traction, ledit support (3) étant pourvu de moyens d'accrochage (24, 25) coopérant avec ladite partie avant d'assise (6) afin de maintenir celle-ci dans au moins une première position dans laquelle elle ne repose pas sur la surface d'appui (21) et dans au moins une deuxième position dans laquelle elle repose sur la surface d'appui (21) et subit une traction vers le bas,
**caractérisée en ce que** ladite partie avant d'assise est formée de deux sections reliées (10, 11), une première section (10) étant adjacente à la partie centrale d'assise (5), la deuxième section (11) formant l'extrémité libre de l'assise, ladite première section (11) pouvant être pliée le long dudit bord de ladite surface d'appui (21) et/ou s'étendre au moins en partie sensiblement dans la continuité de la partie centrale d'assise (5), dans ladite au moins une première position, lesdites première (10) et deuxième (11) sections sont rapprochées, leurs faces inférieures (13, 13') se faisant face et formant un angle aigu, ladite première section (10) s'étendant sensiblement dans la continuité de la partie centrale d'assise (5), **et en ce que** ladite face inférieure (13, 13') de ladite partie avant d'assise est au moins en partie rigide et saillie (16) de l'extrémité libre de ladite partie avant d'assise de manière à pouvoir coopérer avec lesdits moyens d'accrochage du support (25), les moyens d'accrochage (24, 25) du support étant solidaires de la partie avant (20) dudit support ou de son extrémité libre, et sont dirigés vers l'extrémité avant de l'assise.

2. Assise selon la revendication 1, **caractérisée en ce que**, dans ladite au moins une première position, lesdites première (10) et deuxième (11) sections de la partie avant d'assise sont maintenues proches l'une de l'autre par des moyens de maintien (16, 17, 18).

3. Assise selon la revendication 2, **caractérisée en ce que** les moyens de maintien (17, 18) sont solidaires des faces inférieures (13, 13') desdites première et deuxième sections de la partie avant d'assise.

4. Assise selon l'une des revendications 2 ou 3, **caractérisée en ce que** les moyens de maintien (17, 18) sont aptes à coopérer avec lesdits moyens d'accrochage (25) du support dans l'une au moins des première et seconde positions.

5. Assise selon la revendication 1, **caractérisée en ce que** la face inférieure (13, 13') est rigide au niveau des moyens de maintien.

6. Assise selon l'une des revendications 1 à 5, **caractérisée en ce que** la partie avant du support (20) présente au moins deux surfaces adjacentes : une surface (21) formant au moins en partie ladite surface d'appui, et une surface inclinée (22) vers le bas formant avec ladite surface d'appui un angle suffisant pour provoquer le pliage de ladite partie avant d'assise (6) dans ladite au moins une deuxième position.

## Claims

1. Length-adjustable cushion for a motor vehicle seat that is provided with an upholstery pad (2) and with an upholstery pad support (3), the said cushion comprising a central part (5) and a front part (6) extending partly beyond the said support and capable of being folded in such a way as to vary the length of the cushion, the front part (20) of the support comprising a bearing surface (21) capable of supporting one portion (10a) of the said front cushion part when the front cushion part is subjected to downward traction, another portion (10b) of the front cushion part being folded along an edge of the said bearing surface under the effect of the said traction, the said support (3) being provided with latching means (24, 25) cooperating with the said front cushion part (6) in order to maintain the latter in at least one first position in which it does not rest on the bearing surface (21) and in at least one second position in which it rests on the bearing surface (21) and is subjected to downward traction, **characterized in that** the said front cushion part is formed by two interconnected sections (10, 11), a first section (10) being adjacent to the central cushion part (5), the second section (11) forming the free end of the cushion, the said first section (10) being able to be folded along the said edge of the said bearing surface (21) and/or to at least partially extend substantially in the continuity of the central cushion part (5), and, in the said at least one first position, the said first (10) and second (11) sections are close together, their undersides (13, 13') being opposite one another and forming an acute angle, the said first section (10) extending substantially in the continuity of the central cushion part (5), and **in that** the said underside (13, 13') of the said front cushion part is at least partially rigid and projects (16) from the free end of the said front cushion part so as to be able to cooperate with the said latching means (24) of the support, the latching means (24, 25) of the support being secured to the front part (20) of the said support or to its free end and being directed towards the front end of the cushion.

2. Cushion according to Claim 1, **characterized in that,** in the said at least one first position, the said first (10) and second (11) sections of the front cushion part are maintained close to one another by retaining means (16, 17, 18).

3. Cushion according to Claim 2, **characterized in that** the retaining means (17, 18) are secured to the undersides (13, 13') of the said first and second sections of the front cushion part.

4. Cushion according to either of Claims 2 and 3, **characterized in that** the retaining means (17, 18) are capable of cooperating with the said latching means (25) of the support in at least one of the first and second positions.

5. Cushion according to Claim 1, **characterized in that** the underside (13, 13') is rigid in the region of the retaining means.

6. Cushion according to one of Claims 1 to 5,
**characterized in that** the front part of the support (20) has at least two adjacent surfaces: a surface (21) at least partially forming the said bearing surface, and a downwardly inclined surface (22) forming an angle with the said bearing surface that is sufficient to fold the said front cushion part (6) into the said at least one second position.

## Patentansprüche

1. Längenverstellbares Kissen für einen Kraftfahrzeugsitz, das mit einer Polsterung (2) und einer Polsterungsstütze (3) versehen ist, wobei das Kissen einen mittleren Teil (5) und einen vorderen Teil (6) umfasst, der sich teilweise über die Stütze hinaus erstreckt und geeignet ist, so umgebogen zu werden, dass die Länge des Kissen variiert wird, wobei der vordere Teil der Stütze (20) eine Stützfläche (21) umfasst, die geeignet ist, einen Abschnitt (10a) des vorderen Kissenteils zu stützen, wenn der vordere Kissenteil nach unten gezogen wird, wobei ein anderer Abschnitt (10b) des vorderen Kissenteils unter der Wirkung des Zuges entlang einem Rand der Stützfläche umgebogen wird, wobei die Stütze (3) mit Rastmitteln (24, 25) versehen ist, die mit dem vorderen Kissenteil (6) zusammenwirken, damit dieser in mindestens einer ersten Position, in der er nicht auf der Stützfläche (21) ruht, und in mindestens einer zweiten Position gehalten wird, in der er auf der Stützfläche (21) ruht und nach unten gezogen wird,
**dadurch gekennzeichnet, dass** der vordere Kissenteil aus zwei miteinander verbundenen Sektionen (10, 11) gebildet ist, wobei eine erste Sektion (10) dem mittleren Kissenteil (5) benachbart ist und die zweite Sektion (11) das freie Ende des Kissens bildet, wobei die erste Sektion (10) entlang dem Rand der Stützfläche (21) umgebogen werden kann und/oder sich mindestens teilweise im Wesentlichen in der Verlängerung des mittleren Kissenteils (5) erstrecken kann, wobei die erste (10) und die zweite (11) Sektion in der mindestens einen ersten Position einander angenähert sind, wobei sich ihre unteren Flächen (13, 13') gegenüberliegen und einen spitzen Winkel bilden, wobei sich die erste Sektion (10) im Wesentlichen in der Verlängerung des mittleren Kissenteils (5) erstreckt, und dass die untere Fläche (13, 13') des vorderen Kissenteils mindestens teilweise starr ist und vom freien Ende des vorderen Kissenteils so vorragt (16), dass sie mit den Rastmitteln (24) der Stütze zusammenwirken kann, wobei die Rastmittel (24, 25) der Stütze fest mit dem vorderen Teil (20) der Stütze oder mit ihrem freien Ende verbunden und zum vorderen Ende des Kissens gerichtet sind.

2. Kissen nach Anspruch 1, **dadurch gekennzeichnet, dass** die erste (10) und die zweite (11) Sektion des vorderen Kissenteils in der mindestens einen ersten Position durch Haltemittel (16, 17, 18) nahe beieinander gehalten werden.

3. Kissen nach Anspruch 2, **dadurch gekennzeichnet, dass** die Haltemittel (17, 18) fest mit den unteren Flächen (13, 13') der ersten und der zweiten Sektion des vorderen Kissenteils verbunden sind.

4. Kissen nach Anspruch 2 oder 3, **dadurch gekennzeichnet, dass** die Haltemittel (17, 18) geeignet sind, mit den Rastmitteln (25) der Stütze in einer der mindestens ersten und zweiten Position zusammenzuwirken.

5. Kissen nach Anspruch 1, **dadurch gekennzeichnet, dass** die untere Fläche (13, 13') bei den Haltemitteln starr ist.

6. Kissen nach einem der Ansprüche 1 bis 5, **dadurch gekennzeichnet, dass** der vordere Teil der Stütze (20) mindestens zwei benachbarte Flächen aufweist: eine Fläche (21), die mindestens teilweise die Stützfläche bildet, und eine nach unten geneigte Fläche (22), die mit der Stützfläche einen Winkel einschließt, der hinreicht, um das Umbiegen des vorderen Kissenteils (6) in der mindestens einen zweiten Position zu veranlassen.
